# EUROPEAN PATENT SPECIFICATION

(11) **EP 2 739 163 B1**
(45) Date of publication and mention of the grant of the patent: **27.09.2017**
(21) Application number: 12753210.9
(22) Date of filing: 06.08.2012
(51) Int. Cl.: A23L 23/00, A23L 29/231, A23L 27/10

(54) **GELLED FOOD CONCENTRATE**
GELFÖRMIGES NAHRUNGSMITTELKONZENTRAT
CONCENTRÉ ALIMENTAIRE GÉLIFIÉ

(30) Priority: 05.08.2011 GB 201113546; 05.08.2011 GB 201113549; 03.08.2012 GB 201213873
(43) Date of publication of application: 11.06.2014
(73) Proprietor: Premier Foods Group Limited, St Albans, Hertfordshire AL1 2RE (GB)
(72) Inventor: SADD, Peter, St Albans Hertfordshire AL1 2RE (GB); BOTT, Katie, St. Albans Hertfordshire AL1 2RE (GB); TO, Kar-Mun, St Albans Hertfordshire AL1 2RE (GB); WHITMORE, Helen, St Albans Hertfordshire AL1 2RE (GB); CRUTTENDEN, Neil, Leatherhead Surrey KT22 7UD (GB)
(74) Representative: Marchant, Michael John
(86) International application number: PCT/GB2012/051906
(87) International publication number: WO 2013/021191

(56) References cited:
- EP-A1- 1 431 313
- EP-A1- 2 468 110
- EP-A2- 0 758 531
- WO-A1-2007/068402
- WO-A1-2011/076528
- "4.1 Production and Properties of Acid Glucose Syrups" In: Elvers, Barbara et al: "Ullmann's Encyclopedia of Industrial Chemistry", 1989, VCH Verlagsgesellschaft, D-6940 Weinheim, Federal Republic of Germany ISBN: 3-527-20112-2 vol. A12, page 465,

## Description

The present invention relates to a food concentrate in the form of a gel. It further relates to a process to prepare such a food concentrate. The use of said food concentrate to prepare e.g. a stock, soup, sauce, gravy or as a seasoning ingredient for use in cooking is also disclosed.

Concentrates for preparing stocks, soups, sauces and gravies are well known, both as dry powders and liquid concentrates. Dry variants have the advantage of easy portioning, but require the use of fully dried and hence lower quality taste imparting ingredients such as herbs. Hence there is a desire for concentrates combining the advantages of both formats (e.g. unit dosing, but allowing the use of undried ingredients).

A number of patents have been disclosed for gelled stocks (e.g. EP2025247, EP2005844, EP2028954, EP2077730, EP2005838, WO2007068402 etc.) however they are based on gelling systems which are either non-vegetarian (gelatine) or perceived as artificial by consumers (xanthan, locust bean gum, modified starches etc.). This defeats the point of having a stock in a more natural looking gelled format.

A further problem with such food concentrates is that the system can re-gel after make up with hot water and subsequent cooling. The diluted system does not necessarily make a firm gel, but a surface skin may form and the product will show more viscosity than expected. This can also be perceived as artificial by consumers. WO2011076528 teaches a method of avoiding this problem by adding polyols to the recipe, but as such ingredients would not normally be added to stocks or gravies this makes the product even less consumer acceptable.

EP2468110 discloses a gel composition based on low-methoxy pectin and calcium ions. However the text admits that combined gels with xanthan are preferred to produce an optimum degree of syneresis (liquid separation), thereby losing the benefit of a consumer friendly ingredients declaration. The sources of calcium exemplified (such as calcium chloride) are also undesirable from a consumer point of view. Furthermore significant levels of calcium are required when making gels of sufficient strength that they could realistically be removed in one piece from the packaging, and the physical stability of the gels so disclosed is only claimed for a period of some weeks. A further disadvantage of products made according to EP2468110 is that the process uses a pasteurisation step which makes it impossible to incorporate any flavouring or other ingredients which cannot tolerate such heat conditions.

Hence, there is a need for a food concentrate in the form of a gel that addresses one or more of the shortcomings of existing gels.

There are advantages in terms of consumer acceptability of making a concentrate in the form of a (packaged) gel, which gel can quickly dissolve in boiling water (e.g. a mass of 20 g would dissolve in a litre of boiling water in less than four minutes and preferably less than two minutes). The concentrate needs to have the appearance of an intact gel when the consumer opens the pack and to remain free or substantially free of syneresis throughout a shelf life of typically a year. Furthermore the gel needs to be a sufficiently elastic, but not too rigid a gel so that the consumer can remove it from the pack in one piece without leaving any residue behind. The person of average skill in the art of food products can recognise a gel when they see one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way): i.e. a material which has some elasticity but is not pourable at ambient temperature and will break on stretching (like a sweet jam).

Pectins are widely used and well accepted in food applications. Two types are commonly used which differ in their degree of esterification (DE). High methoxy pectins (DE>50%) require large amounts of soluble solids and a low pH for gel formation, and are used in traditional jam making. Low methoxy pectins (DE<50%) can form gels with lower solids levels, but require the presence of divalent cations such as calcium to make a gel network and are typically used in low sugar jams.

It is not feasible to use low pH or high sugar levels with stock concentrates for flavour reasons, as these are un-acidic savoury products, but surprisingly it has been found that a suitably firm gel can be obtained by using a low methoxy pectin with a salt level far higher than would be expected in a conventional pectin jam or jelly (and which would be quite unpalatable if consumed directly without dilution) and no added calcium. By 'no added calcium' it is meant that there is no calcium-containing ingredient which is added to the concentrate specifically to promote gel formation (i.e. with the specific intention that the ingredient will promote gel formation). There may be other ingredients present in the recipe which may contain calcium ((typically in small amounts, e.g. (hard) water), but the presence of calcium in such ingredients is considered as being incidental to the inventive concept described herein, since such calcium has not been added as a specific entity with the intention of promoting gel formation.

In a first aspect of the invention there is provided a gelled food concentrate, as described in present claim 1.

In a further aspect, the present invention relates to a method of producing a gelled food concentrate, as described in present claim 9. This packaged concentrate is achieved as follows:
30-60% water (weight %, preferably 40-50%),
5-15% of common salt (weight %, preferably 10-12%),
2-5% of a low methoxy pectin (weight %)
20-64% (weight %) of taste imparting components. pH of the mixture will typically be 4-5. Weight % is preferably based on total

The gel is free or substantially free of syneresis for at least twelve months. To confirm that the invention does not rely on calcium or the taste imparting components, gel strength was measured using a penetration test on a Stable Micro Systems Texture Analyser for a model system of 2.5% pectin, 8.2% maltodextrin and sugar and 10.5% salt. The test used a 5 kg load cell and 1.5 cm diameter aluminium cylindrical probe to penetrate into the sample and gel strength was defined as the force at 8 mm penetration (test probe speed 2 mm/second). No satisfactory gels were formed without salt being present and there was no significant difference between soft or deionised water (Table 1). The calcium present in the hard water did modify the gel's firmness, but hard water was not a necessary ingredient for the recipe. Table 1.

| Water | Result without salt | Result with salt | |
|---|---|---|---|
| | | | Peak force (g) ± S.D. |
| Normal (soft) factory water | No gel formed | Set gel | 43.8 ± 2.6 |
| Deionised water | No gel formed | Set gel | 49.7 ± 5.0 |
| Hard water (150 - 180 p.p.m. Ca²⁺) | Very weak non-cohesive gel | Set gel | 111.9 ± 10.5 |

Without wishing to be bound by theory, it is hypothesised that the concentrate is so saturated with sodium ions that the pectin is forced out of solution after it cools. Because the gels of this invention do not rely on calcium bonds the concentrate is not damaged by shear during or even immediately after cooling as there are always excess sodium ions available to form bonds whatever the orientation of the pectin chains. This benefit would be lost if calcium was added to the system.

A consequence of this tolerance to shear is that it is possible to safely blend additional food ingredients (which are not heat tolerant) into the concentrate when it is cool but has not yet firmed up into a gel. The concentrate will then slowly firm up over time without the need to add any additional gelling agent or other treatment. Suitable additional ingredients might be vegetable pieces, cut herbs, fruit pieces, flavourings, colours, aromas, thickeners, probiotics and vitamins. This cannot be done with conventional pectin systems as the result would be a damaged gel.

Other options for taste-imparting components may include one or more of liquid or dissolvable extracts or concentrates of one or more of meat, fish, herbs, fruit or vegetables, and/or flavours, and/or yeast extract, and/or hydrolysed protein of vegetable, soy, fish, or meat origin. The taste-imparting components may also comprise herbs, vegetables, fruits, meat, fish, crustaceans, or particulates thereof. Such taste-imparting components can be in a not completely dried state. Generally speaking such "wet" ingredients will have a higher quality or higher quality image. Also wet ingredients may be included which do not contribute to taste, but which are there for visual reasons. Such can be e.g. pieces of certain vegetables. Such may be present in the same amount as the taste-imparting components. In the above, "meat" is to be understood to include beef, pork, lamb and chicken (and other fowl). Preferably the amount of taste-imparting components as set out above is 20-64% (by weight on the total packed concentrate). The taste-imparting components can be in a not completely dry state (i.e. partially wet), or be completely wet, but also frozen or dry taste-imparting ingredients may be used herein.

A minority of the salt can be replaced by alternative non-calcium salts to produce a low sodium concentrate. The packaged concentrates described herein are non-sweet, which is characterised by a sweetness as an equivalent to a percentage sucrose of lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners. As used herein, "sweetness index" is a term used to describe the level of sweetness of the dosage form relative to sucrose.

Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in " Römpp Lebensmittelchemie, Georg Thieme Verlag, 1995 ". It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

Further evidence of the novelty of this invention is that in contrast to traditional pectin gel systems, where slow cooling allows better structural rearrangement to take place, final gel firmness here can be enhanced by rapid cooling.

Final gel quality is also enhanced during the early weeks of shelf life as the product matures in pack. Hence time spent passing though the retail distribution chain is actually beneficial and the ultimate consumer sees and uses a superior product to that immediately leaving the production line. The concentrate can provide a stock, soup, sauce, gravy or a seasoning ingredient for use in cooking by diluting said concentrate with aqueous liquid in a ratio of 1:10 to 1:100 (w/v) under the application of heat.

Typically the concentrate would be consumed as a stock or gravy after dilution with about 20 times its weight in hot water, so the salt level as consumed would be less than 1%. This is well below the threshold for gel formation and so there is no risk of re-gelling as the stock cools. Stocks made from this aspect of the invention are watery liquids with no sign of viscosity increase even at room temperature.

Another aspect of the present invention is a method of manufacturing a gel as described herein. In this regard, such a method preferably comprises the following steps:
The water is heated to a temperature that facilitates the dissolution of the ingredients, e.g. 50-100°C, 70-90 °C, typically to around 80°C, and the pectin added.
Once the pectin is fully dissolved, the sugar, maltodextrin and taste imparting components are added and the system again allowed to homogenise.
The salt is then added to the mix.

At this stage, samples may be taken for quality control purposes (pH, total solids etc.).

It will be noted that there is no step of adding specific calcium-containing ingredients, which ingredients have more than incidental amounts of calcium.

Where heat sensitive ingredients are to be incorporated two additional steps may be conducted after the salt is added, as follows:
Cooling of the mix to a safe temperature.
Blending the heat sensitive ingredients into the gel mix.

The final mix is then filled into consumer ready packaging and can be allowed to cool and set in pack.

Thus, the present invention also provides a packaged concentrate, comprising the gel of the present invention contained within a package.

The concentrate according to the present invention and as set out above is used for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

The present invention is now illustrated by the following, not limiting examples.

### Example 1 - Beef stock

| | |
|---|---|
| Factory standard softened water | 39.0% |
| Salt | 10.5% |
| Low methoxy pectin | 2.5% |
| Sugar and maltodextrin | 8.2% |
| Taste imparting components | 38.6% |
| Antifoam agent | 1.0% |
| Preservative (potassium sorbate) | 0.2% |

Manufacture of the concentrate is straightforward and does not require any unusual equipment:
The water is heated to 80°C and the pectin added.
Once this is fully dissolved, the sugar, maltodextrin and taste imparting components are added and the system again allowed to homogenise. The salt is added to the mix and, optionally, samples taken for quality control purposes (pH, total solids etc.).

Where heat sensitive ingredients are to be incorporated two additional steps are required at this point:
Cooling of the mix to a safe temperature.
Blending the heat sensitive ingredients into the gel mix.

The final mix is now filled into consumer ready packaging and can be allowed to cool and set in pack.

### Example 2 - Chicken stock

| | |
|---|---|
| Factory standard softened water | 39.4% |
| Salt | 10.8% |
| Low methoxy pectin | 3.0% |
| Sugar and maltodextrin | 9.8% |
| Taste imparting components | 35.8% |
| Antifoam agent | 1.0% |
| Preservative (potassium sorbate) | 0.2% |

Manufacture of the concentrate is as in example 1.

### Example 3 - Vegetable stock

| | |
|---|---|
| Factory standard softened water | 47.2% |
| Salt | 10.5% |
| Low methoxy pectin | 3.2% |
| Sugar and maltodextrin | 6.0% |
| Taste imparting components | 31.9% |
| Antifoam agent | 1.0% |
| Preservative (potassium sorbate) | 0.2% |

Manufacture of the concentrate is as in example 1.

The examples above include an antifoam agent to assist blending as well as a preservative, but those skilled in the art will appreciate that these are process conveniences which are not essential for the core gelling function. They could be removed by using different process equipment such as ultrasonic defoamers and in pack thermal treatment processes.

Those skilled in the art will also appreciate that it may be advantageous to replace a portion of the common salt in the recipe with one or more other salts (potassium, magnesium etc.) to produce a reduced sodium stock. This may lead to different gel strengths, but the pectin level can readily be adjusted to allow for this.

Equally it will be appreciated that it may be advantageous to trade off pectin level and activity, using higher levels of less reactive pectin or vice versa depending on the relative costs of ingredients from different pectin suppliers.

## Claims

1. A gelled food concentrate which is free or substantially free of syneresis for at least six months and **characterised in that** the concentrate contains no ingredients with more than incidental levels of calcium or polyols, but does not skin or re-gel after it has been diluted in aqueous liquid in a ratio of 1:10 to 1:100 (w/v) under the application of heat and subsequently been allowed to cool to room temperature, said concentrate comprising:
a. 30 - 60% by weight of water
b. 5 - 15% by weight of common salt
c. 2 - 5% by weight of low methoxy pectin with DE < 50 %
d. 20 - 64% by weight of taste imparting components;
wherein the percentage equivalent of sucrose in the concentrate is less than 10%, wherein the concentrate is packaged into consumer ready packaging and wherein the concentrate is gelled such that the consumer can remove it from the packaging in one piece.

2. A concentrate as in claim 1 wherein the gel comprises low methoxy pectin with DE < 50 % which is set by a sodium source such as salt and wherein the percentage equivalent of sucrose in the concentrate is less than 6%.

3. A concentrate as in claims 1-2 wherein the gel is free or substantially free of syneresis for at least twelve months.

4. A concentrate as in claims 1-3 wherein the cooled concentrate is initially still fluid enough to permit the addition of non-heat tolerant ingredients chosen from vegetable pieces, cut herbs, fruit pieces, flavourings, colours, aromas, thickeners, probiotics and vitamins suitable for use in food without impairing the final gel.

5. A concentrate as in claims 1-4 wherein a minority of the salt is replaced by alternative non-calcium salts to produce a low sodium concentrate.

6. A concentrate as in claims 1-5 wherein the concentrate includes taste imparting ingredients including one or more of liquid or dissolvable extracts or concentrates of one or more of meat, fish, herbs, fruit or vegetables, and/or flavours, and/or yeast extract, and/or hydrolysed protein of vegetable, soy, fish, or meat origin, herbs, vegetables, fruits, meat, fish, crustaceans, or particulates thereof.

7. A concentrate as in claims 1-6 wherein the time for a mass of 20g to dissolve in a litre of boiling water is less than four minutes, preferably less than two minutes.

8. A concentrate as in claims 1-7 wherein the concentrate provides a stock, soup, sauce, gravy or a seasoning ingredient for use in cooking by diluting said concentrate with aqueous liquid in a ratio of 1:10 to 1:100 (w/v) under the application of heat.

9. A method of producing a gelled food concentrate which is free or substantially free of syneresis for at least six months and **characterised in that**:
the final gelled food concentrate comprises:
a. 30 - 60% by weight of water
b. 5 - 15% by weight of common salt
c. 2 - 5% by weight of low methoxy pectin having DE < 50%; and
d. 20 - 64% by weight of taste imparting
components; wherein
gelation is induced by the addition of a sodium source to an aqueous solution of low methoxy pectin having DE < 50% where the percentage equivalent of sucrose present is less than 10%, preferably less than 6%,
no ingredients with more than incidental levels of calcium or polyols are present, and
the concentrate will not skin or re-gel after dilution in aqueous liquid in a ratio of 1:10 to 1:100 (w/v) under the application of heat and subsequent cooling,
said method comprising the steps of:
a. fully dissolving the low methoxy pectin in water heated to a temperature that facilitates the dissolution of the pectin,
b. optionally adding sugar, maltodextrin and taste imparting components and allowing the mix to homogenise,
c. adding salt, re-homogenising and cooling, and
d. filling the cooled concentrate into a mould or consumer ready packaging to set.

10. A method as in claim 9 wherein non-heat tolerant ingredients chosen from vegetable pieces, cut herbs, fruit pieces, flavourings, colours, aromas, thickeners, probiotics, vitamins or any other compounds suitable for use in food are added to the cooled concentrate before it sets.

11. A method as in claims 9-10 wherein a minority of the salt is replaced by alternative non-calcium salts to produce a low sodium concentrate.

12. A method as in claims 9-11 wherein the concentrate is able to be removed in one piece from the packaging by the consumer.

## Patentansprüche

1. Ein gelförmiges Nahrungsmittelkonzentrat, das für mindestens sechs Monate frei oder im Wesentlichen frei von Synärese ist und **dadurch gekennzeichnet ist, dass** das Konzentrat keine Bestandteile mit mehr als zufälligem Gehalt von Calcium oder Polyolen enthält, jedoch nach der Verdünnung in wässriger Flüssigkeit in einem Verhältnis von 1 : 10 bis 1 : 100 (w/v) unter Wärmezufuhr und anschließendem Abkühlenlassen auf Raumtemperatur keine Haut formt oder wieder geliert; wobei das Konzentrat Folgendes beinhaltet:
a. 30-60 Gew.-% Wasser
b. 5-15 Gew.-% Kochsalz
c. 2-5 Gew.-% niedrigmethyliertes Pektin mit einem DE < 50 %
d. 20-64 Gew.-% Geschmack verleihende Komponenten;
wobei das Prozentsaccharoseäquivalent in dem Konzentrat geringer als 10 % ist, wobei das Konzentrat in eine fertige Verkaufspackung gepackt ist und wobei das Konzentrat gelförmig ist, so dass der Verbraucher es in einem Stück aus der Packung entnehmen kann.

2. Ein Konzentrat gemäß Anspruch 1, wobei das Gel niedrigmethyliertes Pektin mit einem DE < 50 % beinhaltet, das durch eine Natriumquelle wie etwa Salz fest wird, und wobei das Prozentsaccharoseäquivalent in dem Konzentrat geringer als 6 % ist.

3. Konzentrat gemäß den Ansprüchen 1-2, wobei das Gel für mindestens zwölf Monate frei oder im Wesentlichen frei von Synärese ist.

4. Konzentrat gemäß den Ansprüchen 1-3, wobei das abgekühlte Konzentrat anfangs immer noch flüssig genug ist, um die Zugabe von nicht hitzetoleranten Bestandteilen, ausgewählt aus Gemüsestücken, geschnittenen Kräutern, Obststücken, Geschmackstoffen, Farbstoffen, Aromastoffen, Verdickungsmitteln, Probiotika und Vitaminen ohne Beeinträchtigung des endgültigen Gels zu erlauben.

5. Konzentrat gemäß den Ansprüchen 1-4, wobei ein kleiner Teil des Salzes durch alternative Salze ohne Calcium ersetzt wird, um ein Konzentrat mit niedrigem Natriumgehalt herzustellen.

6. Konzentrat gemäß den Ansprüchen 1-5, wobei das Konzentrat Geschmack verleihende Bestandteile einschließlich eines oder mehrerer von flüssigen oder löslichen Extrakten oder Konzentraten von einem oder mehreren von Fleisch, Fisch, Kräutern, Obst oder Gemüse und/oder Geschmacksstoffen und/oder Hefeextrakt und/oder hydrolisiertem Protein mit Ursprung in Gemüse, Soja, Fisch oder Fleisch, Kräuter, Gemüse, Obst, Fleisch, Fisch, Krustentiere oder Partikel davon umfasst.

7. Konzentrat gemäß den Ansprüchen 1-6, wobei die Zeit für das Auflösen einer Masse von 20 g in einem Liter kochendem Wasser weniger als vier Minuten, vorzugsweise weniger als zwei Minuten beträgt.

8. Konzentrat gemäß den Ansprüchen 1-7, wobei das Konzentrat eine Brühe, Suppe, Soße, Bratensoße oder einen Würzinhaltsstoff zur Verwendung beim Kochen durch das Auflösen des Konzentrats mit wässriger Flüssigkeit in einem Verhältnis von 1 : 10 bis 1 : 100 (w/v) unter Wärmeanwendung bereitstellt.

9. Ein Verfahren zum Herstellen eines gelförmigen Nahrungsmittelkonzentrats, das für mindestens sechs Monate frei oder im Wesentlichen frei von Synärese ist und **dadurch gekennzeichnet ist, dass**:
das endgültige gelförmige Nahrungsmittelkonzentrat Folgendes beinhaltet:
a. 30-60 Gew.-% Wasser
b. 5-15 Gew.-% Kochsalz
c. 2-5 Gew.-% niedrigmethyliertes Pektin mit einem DE < 50 %; und
d. 20-64 Gew.-% Geschmack verleihende Komponenten;
wobei
Gelatinierung durch die Zugabe einer Natriumquelle zu einer wässrigen Lösung von niedrigmethyliertem Pektin mit einem DE < 50 % induziert wird, wobei das vorhandene Prozentsaccharoseäquivalent geringer als 10 %, vorzugsweise weniger als 6 % ist, keine Bestandteile mit mehr als zufälligem Gehalt von Calcium oder Polyolen vorhanden sind, und
das Konzentrat nach der Verdünnung in wässriger Flüssigkeit in einem Verhältnis von 1 : 10 bis 1 : 100 (w/v) unter Wärmezufuhr und anschließendem Abkühlen keine Haut formt oder wieder geliert,
wobei das Verfahren die folgenden Schritte beinhaltet:
a. vollständiges Auflösen des niedrigmethylierten Pektins in Wasser, das auf eine Temperatur erwärmt ist, die die Auflösung des Pektins erleichtert,
b. optional Zugeben von Zucker, Maltodextrin und Geschmack verleihenden Komponenten und Ermöglichen, dass die Mischung homogenisiert,
c. Zugeben von Salz, Re-Homogenisieren und Abkühlen, und
d. Füllen des abgekühlten Konzentrats in eine Form oder eine fertige Verkaufspackung zum Festwerden.

10. Verfahren gemäß Anspruch 9, wobei nicht hitzetolerante Bestandteile, ausgewählt aus Gemüsestücken, geschnittenen Kräutern, Obststücken, Geschmackstoffen, Farbstoffen, Aromastoffen, Verdickungsmitteln, Probiotika und Vitaminen, zu dem abgekühlten Konzentrat hinzugegeben werden, bevor es fest wird.

11. Verfahren gemäß den Ansprüchen 9-10, wobei ein kleiner Teil des Salzes durch alternative Salze ohne Calcium ersetzt wird, um ein Konzentrat mit niedrigem Natriumgehalt herzustellen.

12. Verfahren gemäß den Ansprüchen 9-11, wobei das Konzentrat von dem Verbraucher in einem Stück aus der Packung entnommen werden kann.

## Revendications

1. Un concentré alimentaire gélifié qui est sans ou substantiellement sans synérèse pendant au moins six mois et **caractérisé en ce que** le concentré ne contient aucun ingrédient possédant plus que des niveaux incidents de calcium ou de polyols, mais sur lequel ne se forme pas de peau et qui ne re-gélifie pas après avoir été dilué dans un liquide aqueux dans un rapport allant de 1/10 à 1/100 (p/v) sous l'application de chaleur puis laissé à refroidir à la température ambiante, ledit concentré comprenant :
a. de 30 à 60 % en poids d'eau
b. de 5 à 15 % en poids de sel commun
c. de 2 à 5 % en poids de pectine faiblement méthylée présentant un DE < 50 %
d. de 20 à 64 % en poids de constituants propres à donner du goût ;
dans lequel le pourcentage équivalent en saccharose dans le concentré est inférieur à 10 %, dans lequel le concentré est emballé dans un emballage prêt à la consommation et dans lequel le concentré est gélifié de sorte que le consommateur puisse le retirer de l'emballage en un seul morceau.

2. Un concentré tel que dans la revendication 1 dans lequel le gel comprend de la pectine faiblement méthylée présentant un DE < 50 % qui prend grâce à une source de sodium telle que du sel et dans lequel le pourcentage équivalent en saccharose dans le concentré est inférieur à 6 %.

3. Un concentré tel que dans les revendications 1 à 2 dans lequel le gel est sans ou substantiellement sans synérèse pendant au moins douze mois.

4. Un concentré tel que dans les revendications 1 à 3 dans lequel le concentré refroidi est initialement encore suffisamment fluide pour permettre l'ajout d'ingrédients ne tolérant pas la chaleur choisis parmi des morceaux de légumes, des fines herbes coupées, des morceaux de fruits, des aromatisants, des couleurs, des arômes, des épaississants, des probiotiques et des vitamines sans détériorer le gel final.

5. Un concentré tel que dans les revendications 1 à 4 dans lequel une partie minoritaire du sel est remplacée par d'autres sels non calciques pour produire un concentré à faible teneur en sodium.

6. Un concentré tel que dans les revendications 1 à 5, le concentré comportant des ingrédients propres à donner du goût y compris un ou plusieurs ingrédients parmi des concentrés ou des extraits liquides ou dissolubles d'un ou de plusieurs éléments parmi de la viande, du poisson, des fines herbes, des fruits ou des légumes, et/ou des parfums, et/ou un extrait de levure, et/ou une protéine hydrolysée à base de légume, de soja, de poisson ou de viande, des fines herbes, des légumes, des fruits, de la viande, du poisson, des crustacés, ou des matières particulaires de ceux-ci.

7. Un concentré tel que dans les revendications 1 à 6 dans lequel le temps nécessaire pour qu'une masse de 20 g se dissolve dans un litre d'eau bouillante est inférieur à quatre minutes, de préférence inférieur à deux minutes.

8. Un concentré tel que dans les revendications 1 à 7, le concentré permettant d'obtenir un bouillon, une soupe, une sauce, un jus ou un ingrédient d'assaisonnement destiné à être utilisé en cuisine par dilution dudit concentré avec un liquide aqueux dans un rapport allant de 1/10 à 1/100 (p/v) sous l'application de chaleur.

9. Un procédé de production d'un concentré alimentaire gélifié qui est sans ou substantiellement sans synérèse pendant au moins six mois et **caractérisé en ce que** :
le concentré alimentaire gélifié final comprend :
a. de 30 à 60 % en poids d'eau
b. de 5 à 15 % en poids de sel commun
c. de 2 à 5 % en poids de pectine faiblement méthylée ayant un DE < 50 % ; et
d. de 20 à 64 % en poids de constituants propres à donner du goût ; dans lequel la gélification est induite par l'ajout d'une source de sodium dans une solution aqueuse de pectine faiblement méthylée ayant un DE < 50 % où le pourcentage équivalent en saccharose présente est inférieur à 10 %, préférablement inférieur à 6 %,
aucun ingrédient présentant plus que des niveaux incidents de calcium ou de polyols n'est présent, et
il ne se formera pas de peau sur le concentré qui ne re-gélifiera pas non plus après avoir été dilué dans un liquide aqueux dans un rapport allant de 1/10 à 1/100 (p/v) sous l'application de chaleur puis laissé à refroidir,
ledit procédé comprenant les étapes consistant à :
a. dissoudre entièrement la pectine faiblement méthylée dans de l'eau chauffée à une température facilitant la dissolution de la pectine,
b. ajouter facultativement du sucre, de la maltodextrine et des constituants propres à donner du goût et laisser le mélange devenir homogène,
c. ajouter du sel, laisser redevenir homogène et laisser refroidir, et
d. remplir de concentré refroidi un moule ou un emballage prêt à la consommation et laisser prendre.

10. Un procédé tel que dans la revendication 9 dans lequel des ingrédients ne tolérant pas la chaleur choisis parmi des morceaux de légumes, des fines herbes coupées, des morceaux de fruits, des aromatisants, des couleurs, des arômes, des épaississants, des probiotiques et des vitamines sont ajoutés au concentré refroidi avant qu'il ne prenne.

11. Un procédé tel que dans les revendications 9 à 10 dans lequel une partie minoritaire du sel est remplacée par d'autres sels non calciques pour produire un concentré à faible teneur en sodium.

12. Un procédé tel que dans les revendications 9 à 11 dans lequel le concentré peut être retiré de l'emballage en un seul morceau par le consommateur.
